# EUROPEAN PATENT SPECIFICATION

(11) **EP 4 223 383 B1**
(45) Date of publication and mention of the grant of the patent: **19.08.2026**
(21) Application number: 22155008.0
(22) Date of filing: 03.02.2022
(51) Int. Cl.: B01D 46/00, B01D 46/24, B01D 46/64

(54) **FILTER SYSTEM HAVING A PRIMARY AND A SECONDARY FILTER ELEMENT AND SECONDARY FILTER ELEMENT FOR SUCH A FILTER SYSTEM**
FILTERSYSTEM MIT EINEM PRIMÄR- UND EINEM SEKUNDÄRFILTERELEMENT UND PRIMÄRFILTERELEMENT FÜR SOLCH EIN FILTERSYSTEM
SYSTÈME DE FILTRE DOTÉ D'UN ÉLÉMENT FILTRANT PRIMAIRE ET D'UN ÉLÉMENT FILTRANT SECONDAIRE ET ÉLÉMENT FILTRANT PRIMAIRE POUR UN TEL SYSTÈME DE FILTRE

(43) Date of publication of application: 09.08.2023
(73) Proprietor: MANN+HUMMEL GmbH, 71636 Ludwigsburg (DE)
(72) Inventor: ALAGOUDA, Bharatesh, 591201 Chikkodi (IN); SHRIMALI, Mayank, 560072 Bangalore (IN); SHARMA, Mridul, 560094 Bangalore (IN); JOHN, Juno, 560068 Bangalore (IN)
(74) Representative: Mann + Hummel Intellectual Property

(56) References cited:
- WO-A1-2010/057843
- WO-A1-2020/260159
- DE-A1- 102015 120 625
- US-A1- 2010 146 917

## Description

### Technical Field

The invention relates to a filter system having a primary and a secondary filter element and a secondary filter element for such a filter system, in particular for an air filter system of an internal combustion engine.

### Prior Art

It is known to use air filters in order to control combustion intake air for internal combustion engines in passenger vehicles, commercial vehicles, work machines, agricultural vehicles, but also stationary generators and the like. Such air filters generally comprise a housing, an air inlet, and an air outlet, with a removable and replaceable main or primary filter element disposed within the housing. The housing often includes a maintenance cover for access to the filter element inside the housing during maintenance. For this purpose, the filter element can be removed and either replaced by a new filter element, overtaken and reused, or replaced by a previously used, but overtaken filter element.

The filter elements of air filters are usually replaced after a certain operating time. Depending on the dust load on the filter element during usage, the service life of a filter can be several days, for example when used in construction machines, up to several months in a less dusty environment.

In order to protect the clean side of an air cleaner system of an internal combustion engine against penetrating dirt particles when replacing the main filter element, a so-called "secondary filter element" is used, which remains in the filter housing during replacement of the primary filter element. The secondary filter element is usually located on the clean side of the filter element, for example inside the primary filter element, and is connected to the housing of the filter system. The secondary filter element itself also has a filter medium which keeps residual dirt particles away from the filter outlet in the air stream.

Optionally, the secondary filter element itself can be exchanged as it can be loaded with dust particles. The lifetime of the secondary filter element, however, is much longer than the lifetime of the primary filter element.

US 2010/0146917 A1 discloses an air cleaner assembly comprising an air cleaner housing comprising a main housing having a first end with an axial air flow outlet, and a second, open end. The main housing body includes an inner, annular, main filter sealing member; an inner, annular, safety filter sealing member; a safety liner extending from the main housing first end and comprising an open support structure and a closed end cap; and an air flow inlet. The air cleaner assembly further comprises a safety filter element extending over the safety liner. The safety filter element comprises a first end comprising an annular sealing member for engaging the inner annular safety filter sealing member, a second end for engaging the closed end cap of the safety liner, and safety media structure extending from the first end to the second end and covering the safety liner support structure. The air cleaner assembly further comprises a main filter element comprising first and second opposite ends, wherein the first end has an air flow exit aperture there through; an annular extension of filter media extending between the first and the second ends; a first, open, end cap adjacent the first end of the main filter element, the media being embedded in the first, open end cap, and the first, open end cap having a perimeter with a radial seal; a second, closed, end cap adjacent the second end of the main filter element and having a surface supported by the closed end cap of the safety liner. The air cleaner assembly further comprises a service cover secured to the housing open end. Document WO2020260159 discloses a filter assembly according to the preamble of claim 1.

### Disclosure of the Invention

It is an object of the invention to provide a filter system for accommodating a secondary filter element and a primary filter element in a housing under reproducible conditions.

The aforementioned object is achieved according to one aspect of the invention by a filter system comprising a housing, a fluid inlet formed in a first housing part, a fluid outlet formed in the first housing part, a primary filter element and a secondary filter element, both being accommodated in the housing, and a primary center pipe and a secondary center pipe being arranged inside the housing, characterised in that the primary center pipe is attached to a second housing part and the secondary center pipe is attached to the first housing part, wherein the secondary center pipe extends into the primary center pipe, and wherein the primary filter element is arranged on the primary center pipe, and the secondary filter element is arranged downstream of the primary filter element on the secondary center pipe, an inside of the secondary filter element being in fluid connection with the fluid outlet.

Advantageous embodiments and advantages of the invention are described in the further claims, the description and the drawings.

According to a first aspect of the invention, a filter system is proposed comprising a housing, a fluid inlet formed in a first housing part, a fluid outlet formed in the first housing part, a primary filter element and a secondary filter element, both being accommodated in the housing. The filter system comprises a primary center pipe and a secondary center pipe being arranged inside the housing. The primary center pipe is attached to a second housing part and the secondary center pipe is attached to the first housing part, wherein the secondary center pipe extends into the primary center pipe. The primary filter element is arranged on the primary center pipe, and the secondary filter element is arranged downstream of the primary filter element on the secondary center pipe. An inside of the secondary filter element is in fluid connection with the fluid outlet.

The filter system preferably may be used as an air cleaner for truck vehicle or heavy duty applications.

The secondary filter element is arranged inside the primary center pipe.

According to one preferred embodiment, the primary center pipe may be attached to the second housing part, e.g. a housing cover, whereas the secondary center pipe may be attached to a first housing part, e.g. a housing jacket. Thus the primary center pipe and the secondary center pipe are implemented as independent center pipes which are mounted separately to the housing of the filter system. Preferably at least the primary center pipe may be attached to the housing of the filter system by threading or by snap-fitting. Thus the primary center pipe may be replaced if necessary. The secondary center pipe may be attached to the first housing part by threading or by snap-fitting. Alternatively the second center pipe may be integral with the first housing part.

During service, whenever a filter element is replaced, its center pipe also will be disposed/scrapped along with its aggregates. This wastage of center pipes can be avoided by integrating them with the air cleaner housing resulting in reduction of manufacturing cost of air filter elements.

Reproducible self-positioning features for secondary filter element positioning may be implemented which ensures a better and reproducible response of mass air flow sensors mounted downstream of the filter system.

An advantage of the embodiment is to have a low service cost element design achieved by integrating the primary and/or the secondary filter element center pipe inside the housing. The integration of center pipes inside the housing ensures a cost reduction of the primary and the secondary filter element. Scrapping of center pipes during a filter element service may be avoided, hence reduced filter element recycling costs and lesser carbon foot print as well may be achieved.

Separate primary and secondary center pipe tools may be combined in one tool, thereby reducing tooling cost. This is even possible by separating the primary center pipe and the secondary center pipe after manufacturing them. A process and/or production cost reduction may further be achieved.

Moreover, a further advantage of such a filter system is the safe and stable assembly of both the primary filter element and the secondary filter element, as well as a very economical interchangeability of the primary filter element and, if appropriate, of the secondary filter element in the event of maintenance.

The filter medium of the secondary filter element may be formed from a nonwoven or from paper or cellulose or from a mixed fiber of plastic and cellulose. A material suitable for the intended purpose of use can be selected. Advantageously, the filter medium can be designed endlessly on the circumference of the secondary filter element with at least one longitudinal seam. Planar surfaces of filter media can be used for the production of the secondary filter element, which are wound onto a corresponding shaped body and closed by welding the open ends along a longitudinal seam, for example, whereby the tightness of the secondary filter element is achieved.

According to a favorable embodiment, a top region of the primary center pipe may be attached to the second housing part by snap-fit elements. Thus a stable fixing of the primary center pipe to the second housing part may be achieved. When needed the primary center pipe may be replaced by detaching the snap-fit elements from the second housing part. Mounting by snap-fit elements enables a quick and favorably reproducible positioning of the primary center pipe in the second housing part.

According to a favorable embodiment, a first snap-fit element may be provided at the top region of the primary center pipe and is adapted to interact with a second snap-fit element provided by the second housing part. By this way stable and reproducible mounting of the primary center pipe to the second housing part may be achieved. Mounting by snap-fit elements enables a quick and favorably reproducible positioning of the primary center pipe in the second housing part

According to a favorable embodiment, the second snap-fit element may be positioned radially inside a wall of a groove for accommodating a support structure of an end plate of the primary filter element. Thus a stable and favorably reproducible mounting of the primary center pipe to the second housing part may be achieved. The wall of the groove serves as a stable counterpart for the first snap-fit element of the primary center pipe.

According to a favorable embodiment, the first snap-fit element may provide a seal against the first support structure of the first end plate of the primary filter element when the primary center pipe is mounted to the second housing part. Thus effective and durable sealing of the clean air side of the filter system against the raw air side may be achieved. The seal may be achieved by pressing the first snap-fit element against the first support structure of the first end plate of the primary filter element.

According to a favorable embodiment, the snap-fit elements may be formed as hook-like shapes for interacting with each other when the primary center pipe is mounted to the second housing part. Thus an effective and stable connection between the snap-fit elements may be achieved. Once mounted the primary center pipe can only be detached by surpassing a definite force of the snap-fit connection.

According to a favorable embodiment, an axial end of the secondary center pipe may be attached to the first housing part by threading. Thus a stable fixing of the secondary center pipe to the first housing part may be achieved. When needed the secondary center pipe may be replaced by unthreading from the first housing part.

According to a favorable embodiment, a thread may be provided at the axial end of the secondary center pipe and is adapted to interact with a mating thread provided by the first housing part. In particular the thread may be arranged on an axial extension of the secondary center pipe. By this way stable and reproducible mounting of the secondary center pipe to the first housing part may be achieved. Through the axial extension a favorable guidance of the secondary center pipe when being mounted is possible.

According to a favorable embodiment, the mating thread may be positioned inside a guiding structure for the secondary center pipe being connected to a tube of the outlet of the first housing part. Cooperation of the axial extension of the secondary center pipe with the guiding structure may result in a stable and favorably reproducible mounting of the secondary center pipe.

According to a favorable embodiment, a gasket may be provided upstream the mating thread between the secondary center pipe and the guiding structure. Thus effective and durable sealing of the clean air side of the filter system against the raw air side may be achieved.

According to a favorable embodiment, the first housing part may comprise a detachable bottom wall, and the secondary center pipe may be integral with the bottom wall. Thus the secondary center pipe remains always in this fixed position. No mounting tolerances of the secondary center pipe need to be considered when mounting the secondary filter element. A common tool for manufacturing may be used thus reducing the manufacturing costs in sum of the first housing part and the secondary center pipe.

According to a favorable embodiment, the secondary center pipe may have a predominantly conical shape, and the primary center pipe may have a predominantly cylindrical shape. This enables to use approved designs of primary and secondary filter elements in the proposed filter system with the independent center pipes.

Advantageously, the inventive filter system with a primary and a secondary filter element can be used as an air filter, in particular as an air filter of an internal combustion engine. The safe operation of internal combustion engines is also based on safe and favorable filtering of the intake air for combustion operation, in particular with an undisturbed flow characteristic of the air at the mass flow sensor. The described filter system represents an economic and reliable possibility for this purpose. The use of the filter system as a particle filter, in particular as a particle filter of an internal combustion engine, is also advantageous. Again, the secure assembly and economic interchangeability of the described filter elements is of advantage. Conveniently, the secondary filter element may remain in the housing when the primary filter element is changed. This ensures that the clean side of the filter system is also effectively protected against penetrating dirt particles during maintenance of the filter system.

### Brief Description of the Drawings

Further advantages result from the following drawing description. Embodiments of the invention are shown in the drawings. The drawings, the description, and the claims contain numerous features in combination. The person skilled in the art will expediently also consider the features individually and combine them into sensible further combinations. For example:
- Fig. 1: shows a longitudinal cut view of a filter system according to an embodiment of the invention;
- Fig. 2: shows the filter system of Fig. 1 in an exploded view;
- Fig. 3: shows a primary filter element of the filter system according to Fig. 1;
- Fig. 4: shows a secondary filter element of the filter system according to Fig. 1;
- Fig. 5: shows a detail Z of the first end plate of the primary filter element according to Fig. 1;
- Fig. 6: shows a detail Y of the top region of the secondary center pipe according to Fig. 1;
- Fig. 7: shows a detail X of the threading of the secondary center pipe to the first housing part according to Fig. 1;
- Fig. 8: shows a further detail W of the threading according to Fig. 1;
- Fig. 9: shows a longitudinal cut view of a filter system according to a further embodiment of the invention;
- Fig. 10: shows the filter system of Fig. 9 in an exploded view;
- Fig. 11: shows a primary filter element of the filter system according to Fig. 9;
- Fig. 12: shows a secondary filter element of the filter system according to Fig. 9;
- Fig. 13: shows a detail Z of the first end plate of the primary filter element according to Fig. 9;
- Fig. 14: shows a detail Y of the top region of the secondary center pipe according to Fig. 9; and
- Fig. 15: shows a detail X of the integration of the primary filter element to the first housing part according to Fig. 9.

### Detailed Description of the Drawings

The figures show merely examples and are not intended to be limiting. Similar or equal elements are referred to with same reference numerals in the Figures.

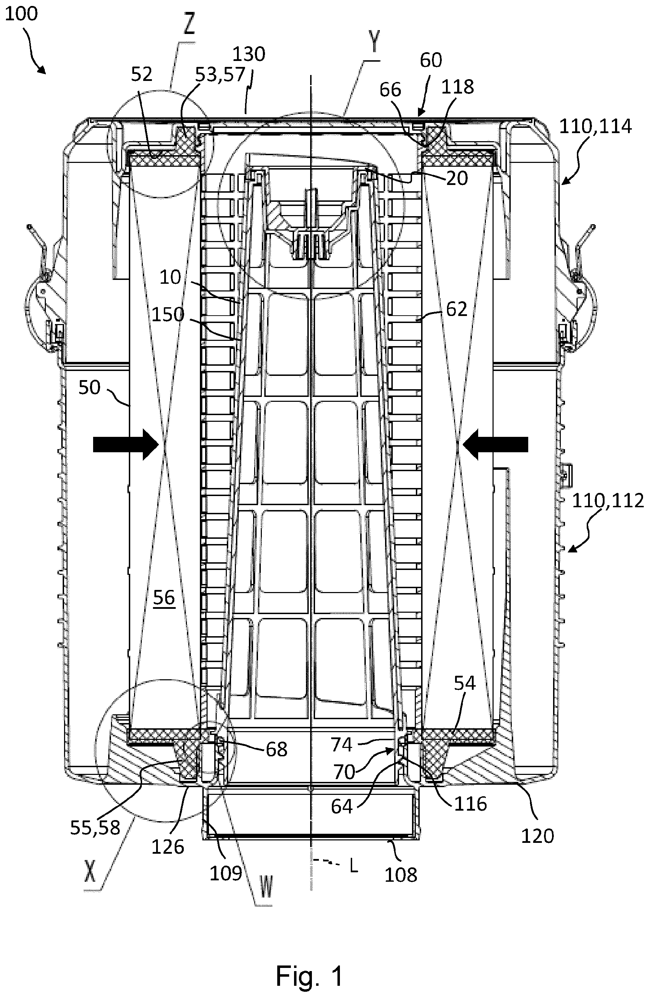

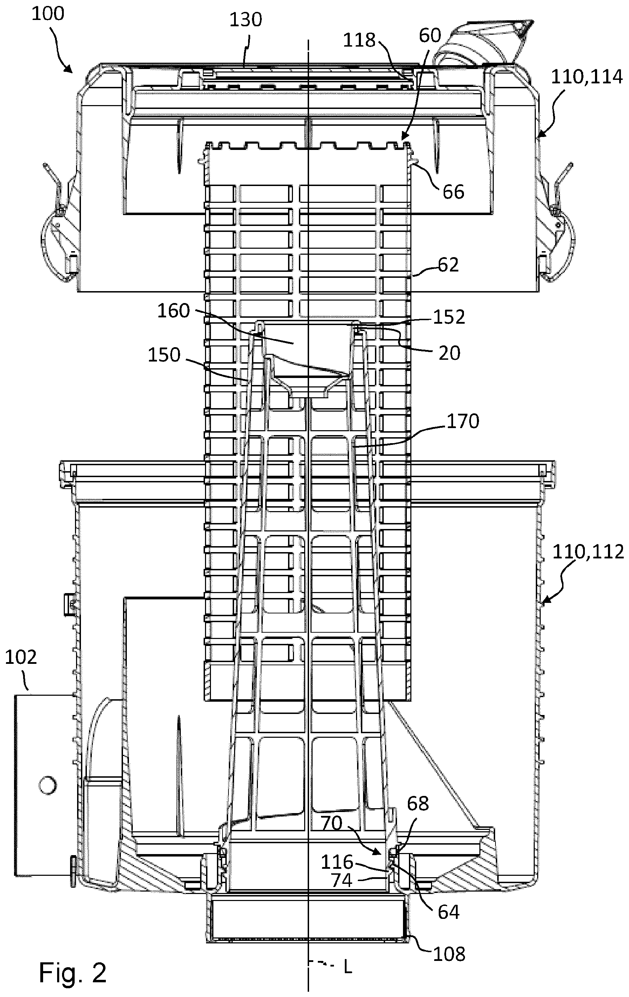

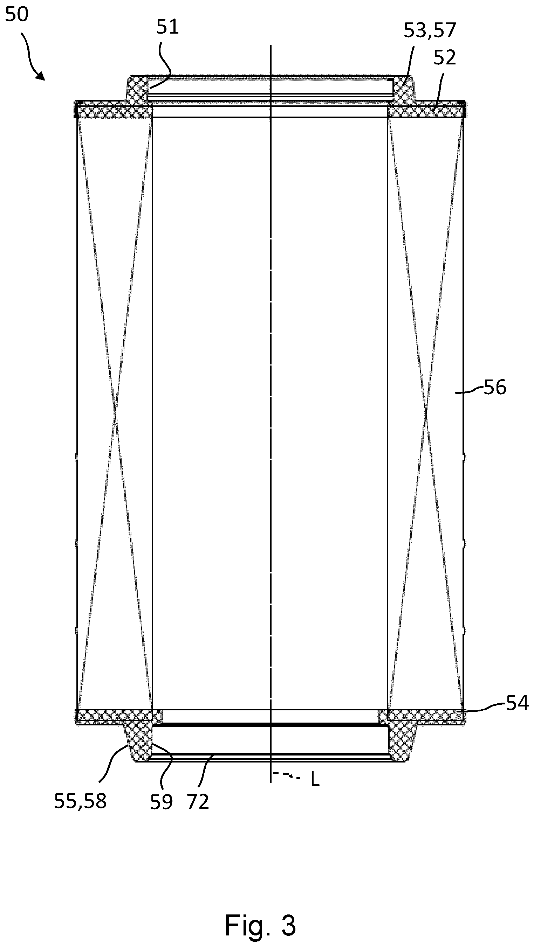

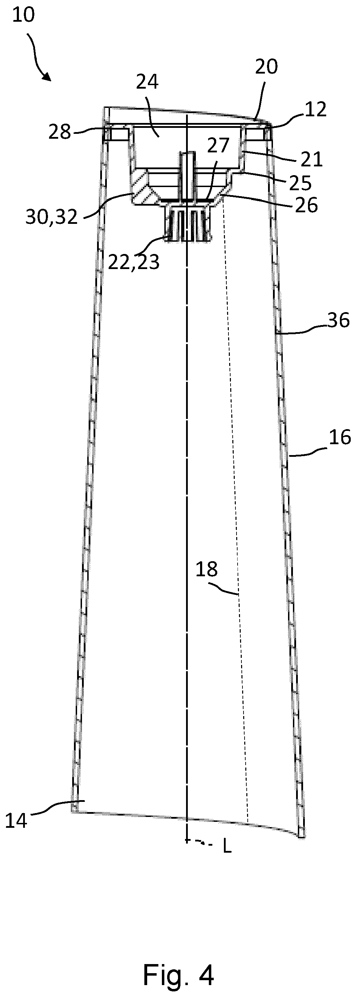

Figure 1 shows a longitudinal cut view of a filter system 100 according to an embodiment of the invention. Figure 2 shows the filter system 100 of Figure 1 in an exploded view. Figure 3 shows a primary filter element 50 of the filter system 100 and Figure 4 shows a secondary filter element 10 of the filter system 100.

The filter system 100 comprises a housing 110, a fluid inlet 102 formed in a first housing part 112, a fluid outlet 108 formed in the first housing part 112, a primary filter element 50 and a secondary filter element 10, both being accommodated in the housing 110. In this embodiment, the housing 110 may consist of the first housing part 112 and a second housing part 114. The segments 112, 114 are connected to each other by, e.g., clamps or the like.

The filter system 100 comprises a primary center pipe 62 and a secondary center pipe 150 being arranged inside the housing 110. The primary center pipe 62 is attached to the second housing part 114 and the secondary center pipe 150 is attached to the first housing part 112. The secondary center pipe 150 extends into the primary center pipe 62. The secondary center pipe 150 has a predominantly conical shape and the primary center pipe 62 has a predominantly cylindrical shape.

The primary filter element 50 is arranged on the primary center pipe 62, and the secondary filter element 10 is arranged downstream of the primary filter element 50 on the secondary center pipe 150. The inside of the secondary filter element 10 is in fluid connection with the fluid outlet 108.

The body of the primary filter element 50 is made of a filter medium 56 which may be pleated, for instance. The primary filter element 50 is covered at both ends by ring shaped end plates 52, 54, which are made, for example, from polyurethane which is well known in the prior art. Sealing structures and supporting ribs are arranged at the exterior sides of the end plates 52, 54. The primary filter element 50 is clamped between the first housing part 112 and the second housing part 114 in a sealing tight manner so that a fluid has to pass through the primary filter element 50 in a radial direction, which is indicated by bold arrows in Figure 1. The end plate 54 of the primary filter element 50 is accommodated in the first housing part 112 which is provided with a groove 126.

Each of the ring shaped end plates 52, 54 preferably seals radially against a respective housing part, preferably with a radially inner sealing surface 51, 59 of an axially projecting annular bead 53, 55 of the housing part (Figure 1).

The primary filter element 50 comprises an opening 72 surrounded by a support structure 58 of the second end plate 54 for being supported when mounted in a housing 110 of the filter system 100. In this embodiment, the support structure 58 is formed by the axially projecting annular bead 55 of the end plate 54. The opening 72 is provided for being adapted to an outlet 108 of the housing 110. The primary filter element 50 is adapted to be mounted on a primary center pipe 62 of the filter system 100.

In its front face 130, the cover part 114 is provided with a recess 138 which extends into the interior of the housing 110.

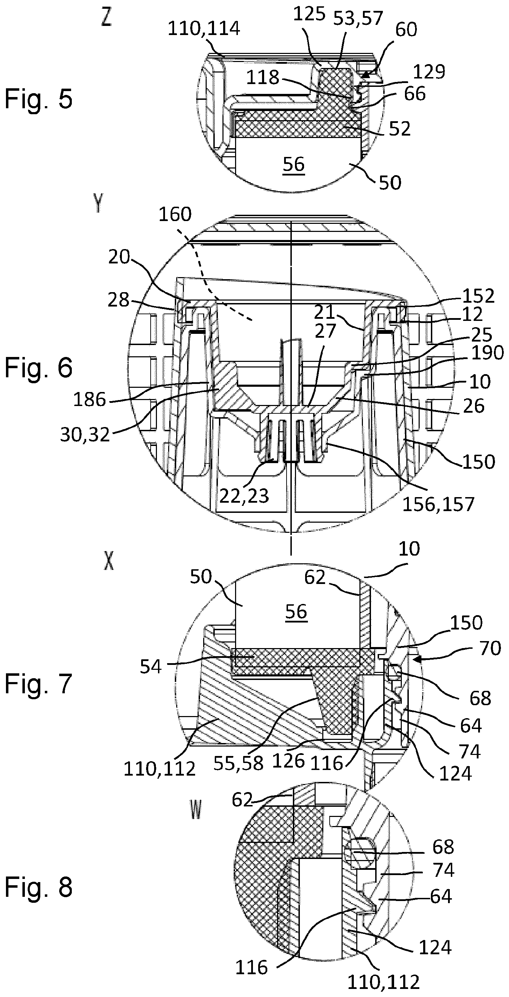

Inside the primary filter element 50 the secondary filter element 10 is arranged. The primary and secondary filter elements 50, 10 are arranged concentrically about an axis in longitudinal direction L. The secondary filter element 10 is arranged downstream the primary filter element 50, inside the primary center pipe 62, so that fluid has to pass through the secondary filter element 10 on its way to the fluid outlet 108. The secondary filter element 10 is arranged on the secondary center pipe 150 which is part of the integrated center pipe 62. The lower part of the secondary center pipe 150 merges with the fluid outlet 108 of the bottom housing wall 120. The secondary filter element 10 comprises a filter medium 16 forming a body 36 with at least one weld seam 18 along the longitudinal direction L, as may be seen in Figure 8.

The secondary filter element 10 comprises a closed end cap 20 at its top region 12, wherein the secondary filter element 10 and the secondary center pipe 150 are mutually connected at their top regions 12, 152 by connection elements. The open ended side of the secondary filter element 10 is accommodated in a circular groove 122 in the bottom wall 120.

The end cap 20 is provided with one or more connection elements 22 which are intended to connect the secondary filter element 10 to a secondary center pipe 150 of the filter system 100. The end cap 20 is provided with a self-positioning element 30 to arrange the secondary filter element 10 on the secondary center pipe 150 of the filter system 100 in a defined rotational position with respect to one or more struts 170 of the secondary center pipe 150 of the filter system 100.

The end cap 20 of the secondary filter element 10 has a pot-like shape. The self-positioning element 30 extends into the interior of the secondary filter medium 16.

The end cap 20 is provided with a projection element 32 extending in axial direction L. In particular, the projection element 32 is arranged eccentrically on the end cap 20 with respect to a center axis of the end cap 20.

Figure 4 shows a first embodiment of a secondary filter element 10 with an end cap 20 having a recess 24 at its exterior side. The secondary filter element 10 has a body 36 consisting of a filter medium 16. The filter medium 16 can be a nonwoven material, paper, cellulose or a mixed fiber of plastic and cellulose. The filter medium 16 can be designed endlessly on the circumference of the secondary element 10 with at least one longitudinal weld seam 18. The filter body 36 formed thereof has a conical shape with a large diameter at a bottom side 14 and a smaller diameter at the top region 12 of the body 36 where the end cap 20 is mounted. Preferably the filter medium 16 is connected to the end cap 20 by way of a circumferential weld seam 28. The recess 24 in the end cap 20 extends into the interior of the body 36.

The secondary center pipe 150 is provided as a carrier of the secondary filter element 10 as shown in Figure 4. The secondary filter element 10 and the secondary center pipe 150 each comprise complementary connecting means with which they can be connected to one another at one of their end faces, shown on top in the Figure 4.This allows for a safe and stable assembly of both the primary filter element 50 (Figure 3) and the secondary filter element 10, as well as a very economical interchangeability of the primary filter element 50 and, if appropriate, of the secondary filter element 10 in the event of maintenance. The secondary filter element 10 rests firmly on the secondary center pipe 150. Due to the closed end cap 20 of the secondary filter element 10, even with dismounted primary filter element 50 the clean side of the filter system 100 is protected against particulate matter even if fluid is still sucked through the secondary filter element 10.

Figure 5 shows a detail Z of the first end plate 52 of the primary filter element 50 according to Figure 1. The top region 60 of the primary center pipe 62 is attached to the second housing part 114 by snap-fit elements 66, 118. The first snap-fit element 66 is provided at the top region 60 of the primary center pipe 62. The first snap-fit-element 66 is adapted to interact with a second snap-fit element 118 provided by the second housing part 114. The second snap-fit element 118 is positioned radially inside a wall 129 of a groove 125 for accommodating a support structure 57 of the end plate 52 of the primary filter element 50. In this embodiment, the support structure 57 is formed by the axially projecting annular bead 53 of the end plate 52.

Thus when inserting the primary center pipe 62 into the second housing part 114 the snap-fit elements 66 at the top region 60 of the primary center pipe 62 cooperates with the mating second snap-fit elements 118 at the wall 129 of the groove 125 of the second housing part 114. The snap-fit elements 66, 118 may be formed as a hook-like shape for interacting with each other when the primary center pipe 62 is mounted to the second housing part 114. By this way an easy and stable connection of the primary center pipe 62 to the first housing part 112 may be achieved.

By pressing the first snap-fit element 66 against the first support structure 57 of the first end plate 52 of the primary filter element 50 a seal is provided when the primary center pipe 62 is mounted to the second housing part 114.

Further, the snap-fit elements 66,118 may be formed as a hook-like shape for interacting with each other when the primary center pipe 62 is mounted to the second housing part 112.

Figure 6 shows a detail Y of the top region 152 of the secondary center pipe 150 according to Figure 1.

The secondary filter element 10 comprises a closed end cap 20 at its top region 12, wherein the secondary filter element 10 and the secondary center pipe 150 are mutually connected at their top regions 12, 152 by connection elements. The open ended side of the secondary filter element 10 is accommodated in a circular groove 122 in the bottom wall 120.

The end cap 20 has a pot like shape comprising two segments, an upper segment 21 with a larger diameter carrying the flange and the bottom segment 26 with a smaller diameter. At the interface between the upper segment 21 and the bottom segment 26, a step 25 is formed due to the different diameters of the segments 21, 26. The bottom segment 26 shows a conical part at the interface and a tapered part towards the closed bottom 27. At the outside of the bottom 27 connection elements 22, embodied as, e.g., snap beams 23, extend further in longitudinal direction. The connection elements 22 are intended to cooperate with corresponding one or more connection elements of the secondary center pipe 150.

In the recess 24 a self-positioning element 30 is arranged, embodied, e.g., as a projection element 32. The projection element 32 extends from the step 25 at the interface between the upper segment 21 and the bottom segment 26 towards the beginning of the tapered section of the bottom segment 26. When seen from the top of the end cap 20, the projection element 32 forms a depression in the step 25 between the upper segment 21 and the bottom segment 26 and may be open towards the bottom segment 26.

The end cap 20 is intended to extend into the interior of the secondary center pipe 150 (Figure 6). In particular the recess 24 of the end cap 20 extends inside a receptacle 160 of the secondary center pipe 150. In a mounted position of the secondary filter element 10 on the secondary center pipe 150, the connection elements 22 cooperate with counter elements 156 for axial connection while the self-positioning element 30 (projection element 32) cooperates with a counter self-positioning element 180 of the secondary center pipe 150.

The secondary center pipe 150 provides a guiding surface 182 as self-positioning element 180 inside a receptacle 160 at the top region 152 of the secondary center pipe 150. The guiding surface 182 runs on the shell of the receptacle 160 and descents at both sides from a top axial position to a minimum axial position. Thus the guiding surface 182 can be described as comprising at least one preferably spiral ramp surface. Preferably, the guiding surface 182 comprises two ramp sections, both extending from a top position to the minimum axial position in counter rotating directions. As the guiding surface 182 extends in a radially inward direction, the projection element 32 can move on the guiding surface 182. In the minimum axial position a pocket 186 is preferably arranged which is intended to receive the projection element 32 of the secondary filter element 10 (Figure 6). The pocket 186 is preferably arranged diametrically opposite of the maximum point 190 of the guiding surface 182. That means the ramp sections preferably both end at the position of the pocket from opposite sides.

The contour of the receptacle 160 corresponds to the exterior contour of the endcap 20 of the secondary filter element 10. The receptacle 160 has an open ended bottom which ends in a connection element 156 for the connection elements 22 of the secondary filter element 10, i.e. the snap beams 23 can be hooked on the bottom of the receptacle 160 as locking element 157 provides a snap fit connection between the secondary center pipe 150 and the secondary filter element 10. The receptacle 160 is funnel shaped in its bottom region so that introducing the snap beams 23 is facilitated.

Figure 7 shows a detail X of the threading of the secondary center pipe 150 to the first housing part 112 according to Figure 1, whereas Figure 8 shows a further detail W of the threading according to Figure 1. An axial end 70 of the secondary center pipe 150 is attached to the first housing part 112 by threading. A thread 64 is provided at the axial end 70 of the secondary center pipe 150 which is adapted to interact with a mating thread 116 provided by the first housing part 112. Preferably, the thread 64 is arranged on an axial extension 74 of the secondary center pipe 150. The mating thread 116 is positioned inside a guiding structure 124 for the secondary center pipe 150 being connected to a tube 109 of the outlet 108 of the first housing part 112. The guiding structure 124 provides an easy and stable mounting of the secondary center pipe 150 to the first housing part 112.

Further, a gasket 68 is provided upstream the mating thread 116 between the secondary center pipe 150 and the guiding structure 124. Thus proper sealing between the secondary center pipe 150 and the first housing part 112 is achieved

The primary filter element 50 is positioned in the first housing part 112 by inserting a support structure 58 of the second end plate 54 of the primary filter element 50 into a groove 126 of the first housing part 112. Thus the primary filter element 50 is mounted in a precise and stable manner in the first housing part 112.

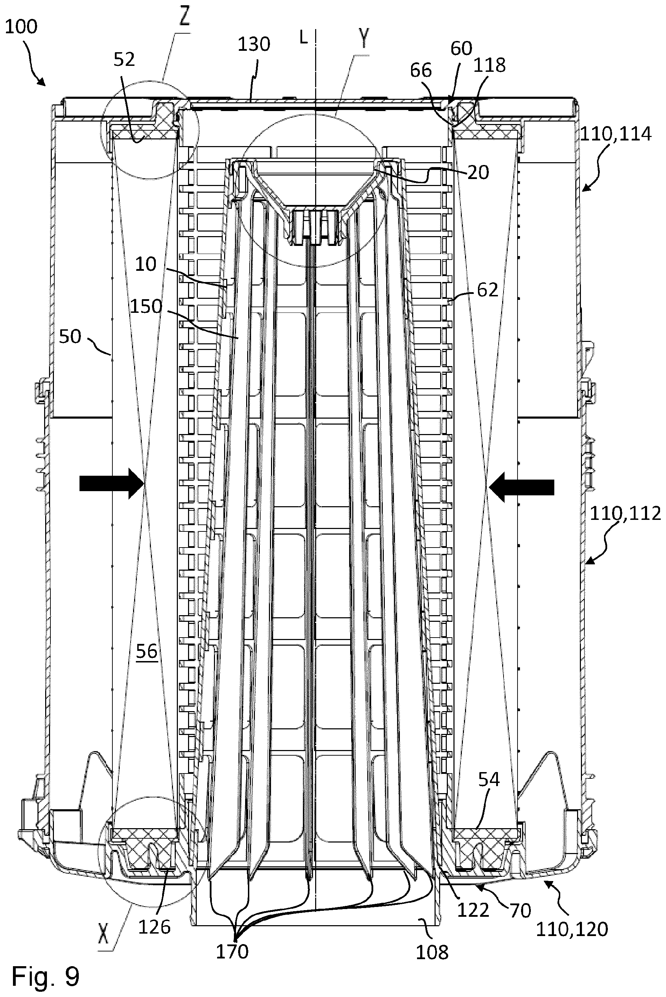

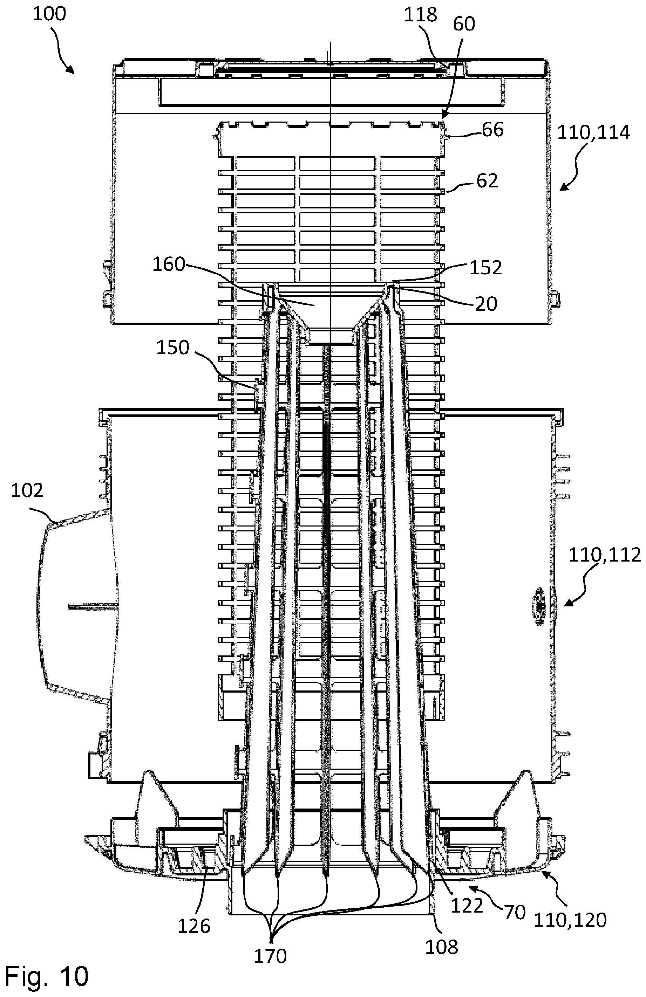

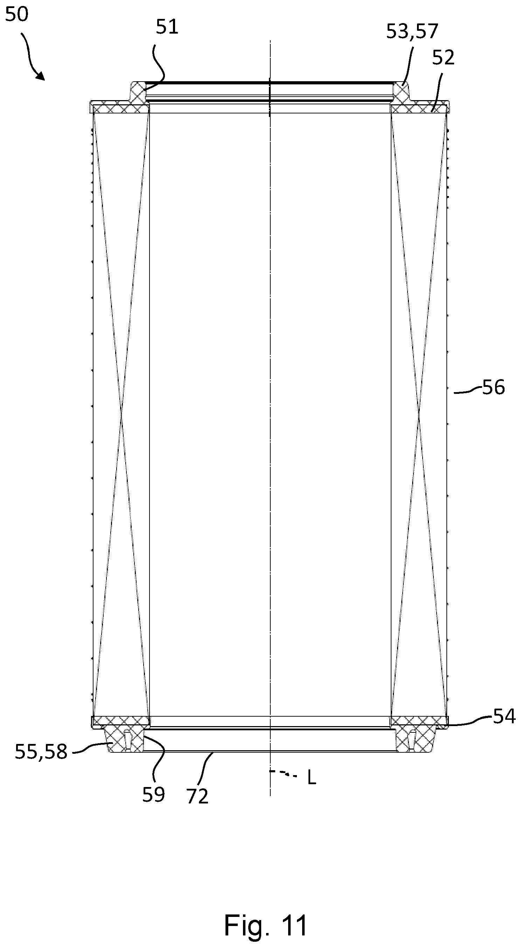

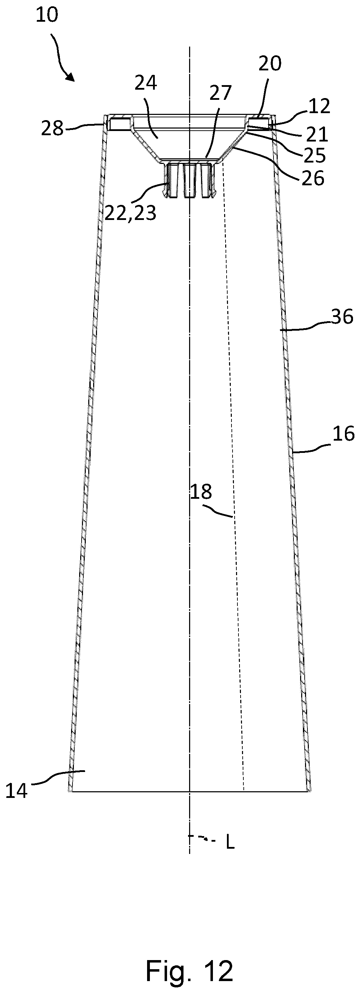

Figure 9 shows a longitudinal cut view of a filter system 100 according to a further embodiment of the invention. Figure 10 shows the filter system 100 of Figure 9 in an exploded view. Figure 11 shows a primary filter element 50 of the filter system 100 and Figure 12 shows a secondary filter element 10 of the filter system 100.

In order to avoid unnecessary repetition of description only the features of the embodiment are described which are different from the first embodiment.

In the embodiment shown in Figures 9 to 15, the first housing part 112 comprises a detachable bottom wall 120, wherein the secondary center pipe 150 is integral with the bottom wall 120. The primary center pipe 62 is attached to the second housing part 114 by snap-fitting as with the embodiment shown in Figures 1 to 8.

In this embodiment, the housing 110 may consist of three segments, the bottom housing wall 120, the intermediate ring-shaped housing wall as a first housing part 112 with the fluid inlet 102 and a second housing part 114. The fluid outlet 108 may be formed in the bottom housing wall 120. The segments are connected to each other by, e.g., clamps or the like. A hollow cylindrical primary filter element 50 is accommodated in the housing 110. For removing the primary filter element 50 for maintenance or exchange the housing parts 112, 114 can be removed from the bottom housing wall 120 together in one piece or only the cover part 114 is removed.

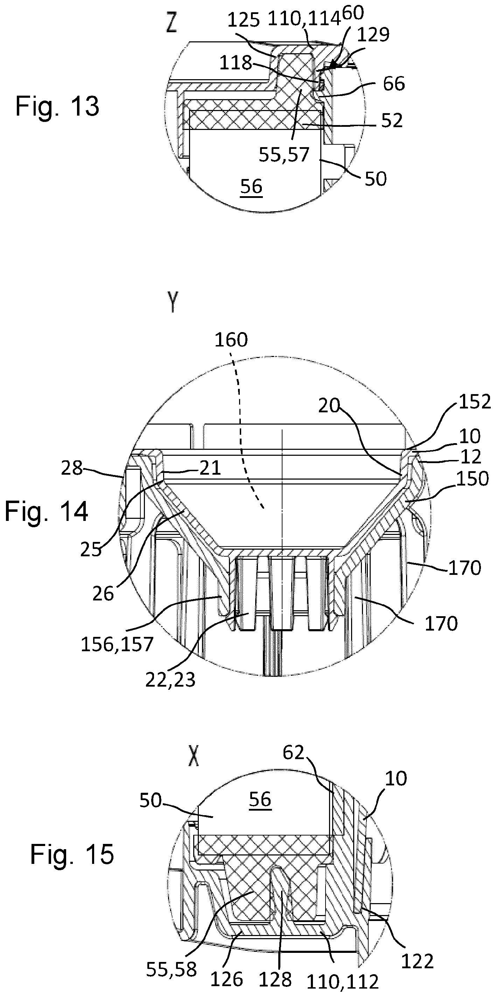

Figure 13 shows a detail Z of the first end plate 52 of the primary filter element 50 according to Figure 9. The top region 60 of the primary center pipe 62 is attached to the second housing part 114 by snap-fit elements 66, 118. The first snap-fit element 66 is provided at the top region 60 of the primary center pipe 62. The first snap-fit-element 66 is adapted to interact with a second snap-fit element 118 provided by the second housing part 114. The second snap-fit element 118 is positioned radially inside a wall 129 of a groove 125 for accommodating a support structure 57 of the end plate 52 of the primary filter element 50.

Figure 14 shows a detail Y of the top region 152 of the secondary center pipe 150 according to Figure 9. The secondary filter element 10 is mounted in the same way as described with the embodiment depicted in Figure 6.

Figure 15 shows a detail X of the integration of the primary filter element 50 to the first housing part according to Figure 9. The primary filter element 50 is clamped between the first housing part 112, in particular between the bottom wall 120 and the second housing part 114 in a sealing tight manner so that a fluid has to pass through the primary filter element 50 in a radial direction, which is indicated by bold arrows in Figure 9. The end plate 54 of the primary filter element 50 is accommodated in the bottom wall 120, which is provided with a groove 126. For radial fixation of the primary filter element 50, a ring shaped projection 128 is arranged in the groove 126.

## Claims

1. A filter system (100) comprising:
a housing (110);
a fluid inlet (102) formed in a first housing part (112);
a fluid outlet (108) formed in the first housing part (112);
a primary filter element (50) and a secondary filter element (10), both being accommodated in the housing (110); and
a primary center pipe (62) and a secondary center pipe (150) being arranged inside the housing (110),
wherein the primary center pipe (62) is attached to a second housing part (114) and the secondary center pipe (150) is attached to the first housing part (112),
**characterized in that**
the secondary center pipe (150) extends into the primary center pipe (62), and
wherein the primary filter element (50) is arranged on the primary center pipe (62), and the secondary filter element (10) is arranged downstream of the primary filter element (50) on the secondary center pipe (150), an inside of the secondary filter element (10) being in fluid connection with the fluid outlet (108).

2. The filter system according to claim 1, wherein a top region (60) of the primary center pipe (62) is attached to the second housing part (114) by snap-fit elements (66, 118).

3. The filter system according to claim 1 or 2, wherein a first snap-fit element (66) is provided at the top region (60) of the primary center pipe (62) and is adapted to interact with a second snap-fit element (118) provided by the second housing part (114).

4. The filter system according to claim 3, wherein the second snap-fit element (118) is positioned radially inside a wall (129) of a groove (125) for accommodating a support structure (57) of the end plate (52) of the primary filter element (50).

5. The filter system according to claim 3 or 4, wherein the first snap-fit element (66) provides a seal against the first support structure (57) of the first end plate (52) of the primary filter element (50) when the primary center pipe (62) is mounted to the second housing part (114).

6. The filter system according to claim 2, wherein the snap-fit elements (66,118) are formed as hook-like shapes for interacting with each other when the primary center pipe (62) is mounted to the second housing part (114).

7. The filter system according to any one of the preceding claims, wherein an axial end (70) of the secondary center pipe (150) is attached to the first housing part (112) by threading.

8. The filter system according to claim 7, wherein a thread (64) is provided at the axial end (70) of the secondary center pipe (150) and is adapted to interact with a mating thread (116) provided by the first housing part (112), in particular wherein the thread (64) is arranged on an axial extension (74) of the secondary center pipe (150).

9. The filter system according to claim 8, wherein the mating thread (116) is positioned inside a guiding structure (124) for the secondary center pipe (150) being connected to a tube (109) of the outlet (108) of the first housing part (112).

10. The filter system according to claim 9, wherein a gasket (68) is provided upstream the mating thread (116) between the secondary center pipe (150) and the guiding structure (124).

11. The filter system according to any one of claims 1 to 6, wherein the first housing part (112) comprises a detachable bottom wall (120), and
wherein the secondary center pipe (150) is integral with the bottom wall (120).

12. The filter system according to any one of the preceding claims, wherein the secondary center pipe (150) has a predominantly conical shape, and the primary center pipe (62) has a predominantly cylindrical shape.

## Patentansprüche

1. Filtersystem (100) umfassend:
ein Gehäuse (110);
einen in einem ersten Gehäuseteil (112) gebildeten Fluideinlass (102);
einen in dem ersten Gehäuseteil (112) gebildeten Fluidauslass (108);
ein Primärfilterelement (50) und ein Sekundärfilterelement (10), die beide in dem Gehäuse (110) aufgenommen sind; und
ein Primärmittelrohr (62) und ein Sekundärmittelrohr (150), die innerhalb des Gehäuses (110) angeordnet sind,
wobei das Primärmittelrohr (62) an einem zweiten Gehäuseteil (114) befestigt ist und das Sekundärmittelrohr (150) an dem ersten Gehäuseteil (112) befestigt ist,
**dadurch gekennzeichnet, dass**
sich das Sekundärmittelrohr (150) in das Primärmittelrohr (62) erstreckt, und
wobei das Primärfilterelement (50) an dem Primärmittelrohr (62) angeordnet ist und das Sekundärfilterelement (10) stromabwärts des Primärfilterelements (50) an dem Sekundärmittelrohr (150) angeordnet ist, wobei ein Innenraum des Sekundärfilterelements (10) in Fluidverbindung mit dem Fluidauslass (108) steht.

2. Filtersystem nach Anspruch 1, wobei ein oberer Bereich (60) des Primärmittelrohrs (62) mittels Rastelementen (66, 118) an dem zweiten Gehäuseteil (114) befestigt ist.

3. Filtersystem nach Anspruch 1 oder 2, wobei ein erstes Rastelement (66) am oberen Bereich (60) des Primärmittelrohrs (62) vorgesehen ist und dazu ausgelegt ist, mit einem zweiten Rastelement (118) zusammenzuwirken, das vom zweiten Gehäuseteil (114) bereitgestellt wird.

4. Filtersystem nach Anspruch 3, wobei das zweite Rastelement (118) radial innerhalb einer Wand (129) einer Nut (125) zur Aufnahme einer Stützstruktur (57) der Endplatte (52) des Primärfilterelements (50) positioniert ist.

5. Filtersystem nach Anspruch 3 oder 4, wobei das erste Rastelement (66) eine Abdichtung gegenüber der ersten Stützstruktur (57) der ersten Endplatte (52) des Primärfilterelements (50) bildet, wenn das Primärmittelrohr (62) an dem zweiten Gehäuseteil (114) montiert ist.

6. Filtersystem nach Anspruch 2, wobei die Rastelemente (66, 118) als hakenartige Formen ausgebildet sind, um miteinander zusammenzuwirken, wenn das Primärmittelrohr (62) an dem zweiten Gehäuseteil (114) montiert ist.

7. Filtersystem nach einem der obigen Ansprüche, wobei ein Achsende (70) des Sekundärmittelrohrs (150) durch Gewinde an dem ersten Gehäuseteil (112) befestigt ist.

8. Filtersystem nach Anspruch 7, wobei am Achsende (70) des Sekundärmittelrohrs (150) ein Gewinde (64) vorgesehen ist, das dazu ausgelegt ist, mit einem vom ersten Gehäuseteil (112) bereitgestellten Gegengewinde (116) zusammenzuwirken, insbesondere wobei das Gewinde (64) an einer axialen Verlängerung (74) des Sekundärmittelrohrs (150) angeordnet ist.

9. Filtersystem nach Anspruch 8, wobei das Gegengewinde (116) innerhalb einer Führungsstruktur (124) für das mit einem Rohr (109) des Auslasses (108) des ersten Gehäuseteils (112) verbundene Sekundärmittelrohr (150) positioniert ist.

10. Filtersystem nach Anspruch 9, wobei stromaufwärts des Gegengewindes (116) zwischen dem Sekundärmittelrohr (150) und der Führungsstruktur (124) ein Dichtring (68) vorgesehen ist.

11. Filtersystem nach einem der Ansprüche 1 bis 6, wobei das erste Gehäuseteil (112) eine abnehmbare Bodenwand (120) umfasst, und
wobei das Sekundärmittelrohr (150) einstückig mit der Bodenwand (120) ausgebildet ist.

12. Filtersystem nach einem der obigen Ansprüche, wobei das Sekundärmittelrohr (150) eine überwiegend konische Form aufweist und das Primärmittelrohr (62) eine überwiegend zylindrische Form aufweist.

## Revendications

1. Système de filtre (100) comprenant:
un boîtier (110);
une entrée de fluide (102) formée dans une première partie de boîtier (112);
une sortie de fluide (108) formée dans la première partie de boîtier (112);
un élément filtrant primaire (50) et un élément filtrant secondaire (10), tous deux logés dans le boîtier (110); et
un tube central primaire (62) et un tube central secondaire (150) logés à l'intérieur du boîtier (110),
dans lequel le tube central primaire (62) est fixé à une seconde partie de boîtier (114) et le tube central secondaire (150) est fixé à la première partie de boîtier (112),
**caractérisé en ce que**
le tube central secondaire (150) s'étend dans le tube central primaire (62), et
dans lequel l'élément filtrant primaire (50) est disposé sur le tube central primaire (62), et l'élément filtrant secondaire (10) est disposé en aval de l'élément filtrant primaire (50) sur le tube central secondaire (150), l'intérieur de l'élément filtrant secondaire (10) étant en communication fluidique avec la sortie de fluide (108).

2. Système de filtre selon la revendication 1, dans lequel une région supérieure (60) du tube central primaire (62) est fixée à la seconde partie de boîtier (114) par des éléments de verrouillage (66, 118).

3. Système de filtre selon la revendication 1 ou 2, dans lequel un premier élément de verrouillage (66) est prévu au niveau de la région supérieure (60) du tube central primaire (62) et est adapté pour interagir avec un second élément de verrouillage (118) prévu par la seconde partie de boîtier (114).

4. Système de filtre selon la revendication 3, dans lequel le second élément de verrouillage (118) est positionné radialement à l'intérieur d'une paroi (129) d'une rainure (125) destinée à recevoir une structure de support (57) de la plaque d'extrémité (52) de l'élément filtrant primaire (50).

5. Système de filtre selon la revendication 3 ou 4, dans lequel le premier élément de verrouillage (66) assure une étanchéité contre la première structure de support (57) de la première plaque d'extrémité (52) de l'élément filtrant primaire (50) lorsque le tube central primaire (62) est monté sur la seconde partie de boîtier (114).

6. Système de filtre selon la revendication 2, dans lequel les éléments de verrouillage (66, 118) sont formés en forme de crochets pour interagir les uns avec les autres lorsque le tube central primaire (62) est monté sur la seconde partie de boîtier (114).

7. Système de filtre selon l'une quelconque des revendications précédentes, dans lequel une extrémité axiale (70) du tube central secondaire (150) est fixée à la première partie de boîtier (112) par vissage.

8. Système de filtre selon la revendication 7, dans lequel un filetage (64) est prévu à l'extrémité axiale (70) du tube central secondaire (150) et est adapté pour interagir avec un filetage d'accouplement (116) prévu par la première partie de boîtier (112), en particulier dans lequel le filetage (64) est disposé sur une extension axiale (74) du tube central secondaire (150).

9. Système de filtre selon la revendication 8, dans lequel le filetage d'accouplement (116) est positionné à l'intérieur d'une structure de guidage (124) pour le tube central secondaire (150) destiné à être raccordé à un tube (109) de la sortie (108) de la première partie de boîtier (112).

10. Système de filtre selon la revendication 9, dans lequel un joint d'étanchéité (68) est prévu en amont du filetage d'accouplement (116) entre le tube central secondaire (150) et la structure de guidage (124).

11. Système de filtre selon l'une quelconque des revendications 1 à 6, dans lequel la première partie de boîtier (112) comprend une paroi de fond détachable (120), et
dans lequel le tube central secondaire (150) est solidaire de la paroi de fond (120).

12. Système de filtre selon l'une quelconque des revendications précédentes, dans lequel le tube central secondaire (150) présente une forme principalement conique, et le tube central primaire (62) présente une forme principalement cylindrique.
